# EUROPEAN PATENT SPECIFICATION

(11) **EP 1 780 914 B1**
(45) Date of publication and mention of the grant of the patent: **17.06.2009**
(21) Application number: 05292287.9
(22) Date of filing: 27.10.2005
(51) Int. Cl.: H04B 10/18, H04B 10/135

(54) **Adaptive equalization of a polarization scrambled optical signal**
Vorrichtung zur adaptiven Entzerrung eines optischen polarisationsverschlüsselten Signals
Égalisation adaptative d'un signal optique avec brouillage de polarisation

(43) Date of publication of application: 02.05.2007
(73) Proprietor: Alcatel Lucent, 75008 Paris (FR)
(72) Inventor: Bülow, Henning, 70806 Kornwestheim (DE)
(74) Representative: Schmidt, Werner Karl

(56) References cited:
- EP-A- 0 939 503
- US-A1- 2003 011 847
- LIU ET AL: "Experimental Demonstration of Broadband PMD Mitigation through Distributed Fast Polarization Scrambling and FEC" PROCEEDINGS OF THE EUROPEAN CONFERENCE ON OPTICAL COMMUNICATION, September 2004 (2004-09), page complete, XP002328662
- BUELOW H: "EQUALIZATION OF BIT DISTORTION INDUCED BY POLARIZATION MODE DISPERSION" CORE AND ATM NETWORKS. NOC, 17 June 1997 (1997-06-17), pages 65-72, XP001004888

## Description

### Background of the invention

The invention relates to a receiver for an optical signal containing a time-dependent periodic distortion, caused by periodic polarization scrambling, comprising an adaptive equalizer and a feedback signal generating means for generating a feedback signal serving to adjust the equalizer, to a fiber optical system with such a receiver, and to a method for performing adaptive equalization.

Polarization mode dispersion (PMD) is one of the major obstacles in high-speed (bit-rates of 10 to 40 Gb/s) long-haul transmissions.Fast polarisation modulation by polarization scramblers distributed along a dispersive fiber link plus already existing error correction (FEC) in the receiver has been proposed as cost-efficient means to mitigate link PMD for a wavelength-division multiplexed (WDM) signal, see the paper "Experimental Demonstration of Broadband PMD Mitigation through Distributed Fast Polarization Scrambling and FEC" by X. Liu et al. in an ECOC 2004 post-deadline session.

Complementary to this, adaptive electronic equalisers or adaptive tunable optical dispersion compensators are envisaged for 10 Gb/s and next 40 Gb/s line cards to enhance the tolerance to residual dispersion, component aging, and to relax component requirements. Unfortunately, the PMD mitigation by scrambling and the tolerance enhancement by adaptive equalisation do not coexist, since the optical signal and hence the feedback signal which is maximized (or minimized) to tune the equaliser into the optimum position are modulated with the scrambling frequency and thus are invalid.

European patent application No. 05290047.9 by the applicant discloses a receiver for PMD mitigation by polarization scrambling which takes into account the time jitter induced by the scrambling by modulating the phase of the clock signal of the receiver such that the shift in the bit-pulse arrival times caused by the jitter is compensated for. A time-varying distortion is also taken into account by shifting the threshold of a decision gate of the receiver.

US 2003/011847 A1 discloses a method and an apparatus for adaptively receiving, compensating, and transmitting data in optical fiber communication networks. For mitigating PMD, the data is polarization scrambled before it is transmitted to a receiver via an optical fiber line. For further mitigating PMD, it is proposed to measure an eye opening of the received signal and to use an error signal generated therefrom as a feedback control signal for electronic equalizers as well as an optical PMD compensator being part of the receiver.

### Object of the invention

It is the object of the invention to provide a receiver of the above-mentioned kind capable of performing adaptive equalization of a polarization-modulated optical signal, to provide a fiber optical system with such a receiver as well as a method for adaptive equalization with such a receiver.

### Short description of the invention

This object is achieved by a receiver of the above-mentioned kind further comprising a filtering means for filtering the feedback signal by selecting minimum or maximum values of the feedback signal at the scrambling frequency 1/T_{scr} or a beat frequency of different scrambling frequencies 1/T_{beat} of the optical signal.

Depending on the type of implementation, the feedback signal may be a quality signal measured at the equalizer output, e.g. the eye opening measured with an eye monitor, or a bit error rate signal provided by a FEC, or error signal sampled at decision time commonly used in LMS (least-mean-square) adaptation schemes of equalizers such as feed forward equalizer (FFE) and decision feedback equalizer (DFE). For the equalizer adaptation, only the time instances corresponding to the worst distortion of the signal (minima of the quality signal and maxima of the error signal, respectively) which occur periodically have to be improved (maximized or minimized) during the adaptation process. The filtering means is adapted for selecting the maxima and minima which occur at the scrambling rate (e.g. 20 MHz) in case that only one scrambling frequency is present. In case of more than one scrambling frequency in the optical signal, e.g. when at least two scramblers with different scrambling rates are used for the polarization modulation and/or in case that one scrambler with more than one scrambling electrode is used, the filtering means is adjusted to filter the maxima and minima occurring at the beat-frequency of the rates. The filtered signal serves as a new feedback signal for the adaptation control of the equalizer.

In a preferred embodiment, the feedback signal generating means is an eye monitor generating the eye opening as feedback signal representative of the signal quality of the optical signal to be maximized for equalizer adaptation.

In an further embodiment the feedback signal generating means is a FEC decoder providing a bit error signal derived from a FEC error count to be minimized for equalizer adaptation.

In a preferred embodiment the filtering means is a peak detector for storing maxima or minima of the feedback signal, allowing one to detect these values without having to extract the scrambling frequency from the optical signal (see below).

In a highly preferred embodiment, the filtering means is a switch which is triggered by a gating signal generation device extracting the scrambling frequency 1/T_{scr} or the beat frequency 1/T_{beat} from the optical signal. In this case, the time events at which the distortion is maximum/minimum are gated by the switch which is synchronized to the scrambling frequency resp. beat frequency by using a gating control signal from the gating signal generation device. Possible implementations of the gating signal generation are described in detail in the above-referenced European patent application No. 05290047.9. A phase adaptation of the gating to the time events at which the maxima/minima occur has also to be performed, as will be appreciated by the person skilled in the art.

In a further preferred embodiment, the optical signal is structured into successive FEC frames and the beat frequency 1/T_{beat} is larger than a repetition frequency of the FEC frames. In case that several beat frequencies are present, the filtering means is adapted preferably to the lowest beat frequency which is larger than the repetition frequency of the FEC frames (e.g. 100 kHz), as the FEC decoding algorithm is capable of correcting errors occurring at lower frequencies.

In a preferred variant of this embodiment, the adaptive equalizer is an electrical equalizer, in particular a Maximum likelihood sequence estimator (Viterbi equalizer which may be used as a hard-decision device), a Feed-Forward-Equalizer, or a Decision-Feedback-Equalizer. Alternatively, an optical equalizer may be used e.g. realized as a tunable optical dispersion compensator. Such compensators are envisaged for 10 Gb/s and 40 Gb/s line cards in the future.

The invention is also realized in a fiber optical system comprising an optical fiber line with at least one polarization scrambler for polarization modulation of the optical signal transmitted through the optical fiber line, and a receiver as described above. In such a fiber optical system, highly effective PMD mitigation can be performed without scarifying the benefits of dynamic mitigation of other impairments.

In a preferred embodiment, the optical fiber line comprises a plurality of successively arranged polarization scramblers which are synchronized to a common scrambling frequency 1/T_{scr} as described in detail in European patent application No. 05290078.4 by the applicant, incorporated herein by reference in its entirety.

The invention is also realized in a method for performing adaptive equalization of an optical signal containing a time-dependent periodic distortion, caused by periodic polarization scrambling in a receiver which comprises an adaptive equalizer, the method comprising the steps of: a) equalizing the received signal in the equalizer, b) generating a feedback signal indicative of the quality of the equalization, and c) providing the feedback signal to the adaptive equalizer for optimizing the equalization, wherein filtering the feedback signal by selecting minimum or maximum values of the feedback signal occurring at a scrambling frequency 1/T_{scr} or a beat frequency 1/T_{beat} of different scrambling frequencies of the optical signal is performed in a step b2) preceding step c).

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a first embodiment of the inventive receiver with an eye monitor and a peak detector,
- Fig. 2: shows the time-evolution of a feedback signal indicative of the equalization quality generated by the eye monitor of Fig. 1,
- Fig. 3: shows a second embodiment of the inventive receiver with a switch and a gating signal generation device, and
- Fig. 4: shows a fiber optical system according to the invention with a third embodiment of the inventive receiver having a FEC decoder for generating a feedback signal.

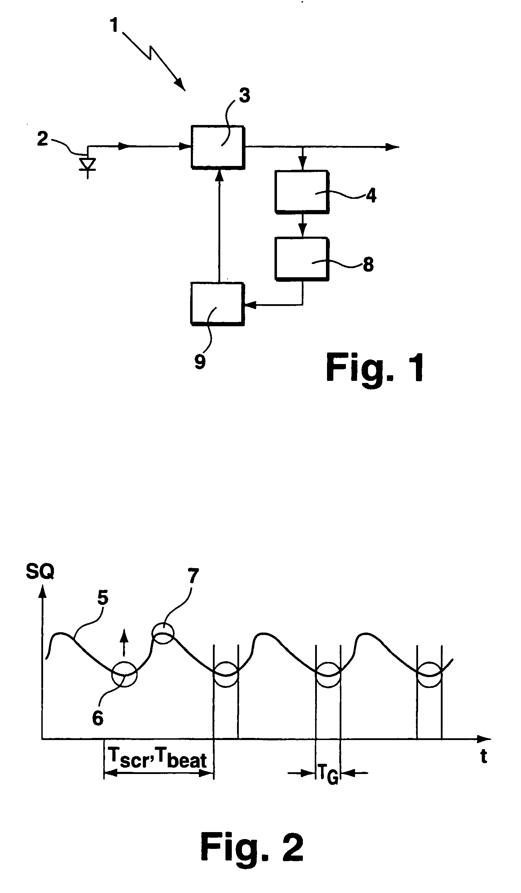

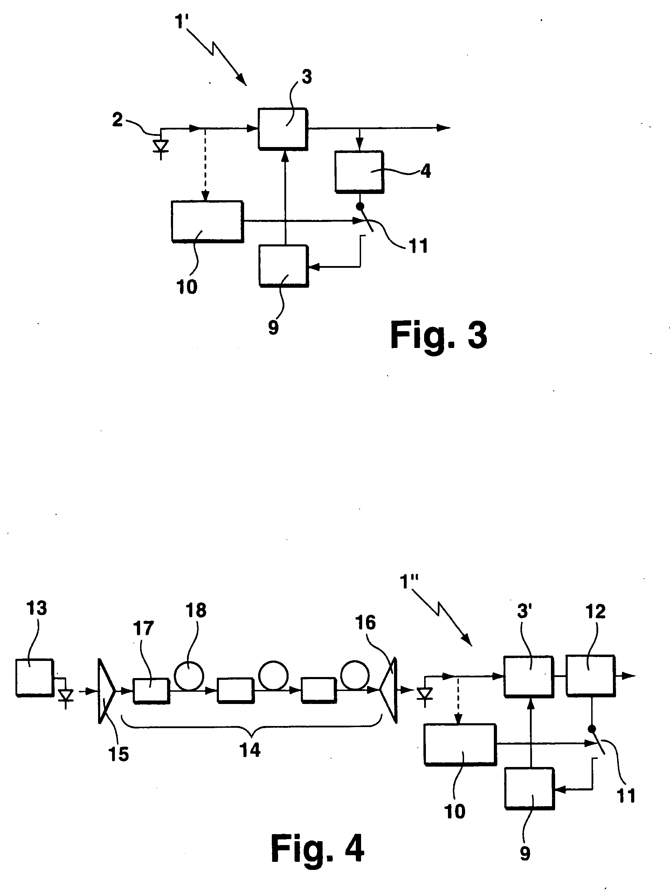

**Fig. 1** shows a receiver **1** for polarization-scrambled optical signals received from a dispersive transmission link (shown and described in detail in connection with **Fig. 4**). The receiver 1 comprises a photo-diode **2** as O/E-converter for converting the optical signal to an electrical signal before providing it as an input to an adjustable electrical equalizer **3,** e.g. a Feed-Forward-Equalizer for equalization of the signal before performing a decision in a subsequent decision gate (not shown). The received optical signal contains a time-dependent, periodic distortion caused by the periodic scrambling. An eye monitor **4** is provided after the equalizer 3 producing a feedback signal **5** (see **Fig. 2**) indicative of its equalization performance. In standard adaptive equalizers, such a feedback signal representing the signal quality is maximized for tuning the equalizer to optimum performance.

However, when dealing with a polarization-scrambled signal, the feedback signal 5 represented in Fig. 2 has a strong modulation and oscillates between a minimum value **6** and a maximum value **7** in a time period **T_{scr}** corresponding to the scrambling frequency (e.g. 20 MHz) when only one such frequency is present, or, in the case of different scrambling frequencies of different scramblers or scrambler electrodes, to a time period **T_{beat}** corresponding to a beat frequency (difference frequency) between e.g. two scrambling frequencies which lies above the FEC frame rate (e.g. 100 kHz). The signal quality at the minimum 6 and maximum values 7 of succeeding time periods T_{scr} is variable and not necessarily constant from period to period as shown in Fig. 2. For adaptation purposes, only the signal quality at the time instances which correspond to the worst distortion, i.e. the minima 6 of the feedback signal 5, are relevant.

For this reason, the quality signal 5 is filtered in a peak detector **8** which is adjusted to store only the minimal values 6 of the feedback signal 5, thus generating a filtered feedback signal which is provided as an input to an adaptation control **9** of the equalizer 3 for performance optimization.

The peak detector 8 does not constitute the only possible means for filtering the feedback signal 5 in order to select the minimal values 6. Alternatively, a receiver **1'** as shown in **Fig. 3** may be used in which the peak detector 8 is replaced by a switch **11** which is triggered by a gating signal generated in a gating signal generating device **10** to which part of the O/E-converted signal is branched before entering the receiver 3. The gating signal generating device 10 reproduces the frequency and phase of the polarization scrambling as described in greater detail in European patent application No. 05290047.9 by the applicant. It may also be used to reproduce the frequency and phase of the beat frequency T_{beat} when several scrambling frequencies are present. The gating signal generating device 10 uses the information about the scrambling for generating a gating signal which closes the switch 11 only for short time periods **T_{G}** about the minima 6 of the feedback signal 5 (see Fig. 2) such that these are selected and can be used as a feedback signal which is provided as an input to the adaptation control 9.

The equalizer 3 described in Fig. 1 and Fig. 2 does not perform hard decisions and has therefore to be used in conjunction with a decision device. In contrast to this, the receiver **1"** shown in Fig. 4 comprises an adaptive equalizer **3'** which is a hard-decision device such as a Maximum likelihood sequence estimator (Viterbi equalizer) which serves to convert bit pulses contained in the O/E converted signal to a bit stream consisting of a set of discrete values (e.g. binary values 0 or 1). In this case, a feedback signal is generated in a subsequent FEC decoder **12,** performing an error count indicative of the quality of the hard decision. The adaptation of the feedback control can be performed in the same way as described in connection with Fig. 3, the only difference being that the gating signal generation device 10 selects the maxima of the error signal instead of the minima, as these correspond to the time instances at which maximum distortion is present in this case.

In order to generate a signal indicative of the equalization quality after a hard decision has been made, the optical signal is encoded before transmission in a FEC encoder (not shown) of a transmitter **13** by adding redundant bits to the data bits to be transmitted. Using the redundant information, the FEC decoder 12 of the receiver 1" is capable of detecting and correcting bit errors in the transmitted signal.

An optical fiber line **14** for transmission of the optical signal at a high bit-rate is arranged between the optical transmitter 13 and the optical receiver 1". At the transmitter end of the optical fiber line 14, a multiplexer **15** is arranged which performs wavelength division multiplexing (WDM) to optical signals with different wavelengths entering the multiplexer 15, forming a wavelength multiplexed signal which is transmitted through the optical fiber line 14 and demultiplexed in a demultiplexer **16** at the receiver end of the optical fiber line 14.

A plurality of fast polarization scramblers **17** are distributed successively along the fiber line 14. Each of the polarization scramblers 17 is followed by a fiber link **18.** The purpose of the polarization scramblers 17 is to provide scrambling signals which generate a periodic polarization change such that bit errors, which are generated by the interference of adjacent bit pulses of the optical signal transmitted through the fiber line 14, can be effectively reduced by the FEC decoder 12 in the receiver 1 ". (Commonly this means that the strong error periods are sufficiently short so that the FEC decoder 12 is capable to correct the errors). All of the polarization scramblers 17 work at the same polarization modulation frequency (typically some 10 MHz) and are synchronized for this purpose as described in greater detail in the above-referenced European patent application No. 05290078.4 by the applicant.

Although the invention is described above in connection with electrical signals and electrical equalizers, the filtering process may also be performed with optical signals by using an adaptive tunable optical dispersion compensator for signal equalization. Also, the invention is not limited to filtering and feedback signal generating means as described above and may be replaced by other means suitable for these purposes known to the person skilled in the art. In summary, the invention provides efficient mitigation of PMD, without sacrificing the benefits of dynamic mitigation of other impairments.

## Claims

1. Receiver (1; 1'; 1") for an optical signal containing a time-dependent periodic distortion, caused by periodic polarization scrambling, comprising: an adaptive equalizer (3; 3'), and a feedback signal generating means (4; 12) for generating a feedback signal (5) serving to adjust the equalizer (3; 3'),
**characterized by**
a filtering means (8; 11) for filtering the feedback signal (5) by selecting minimum or maximum values (6, 7) of the feedback signal (5) at the scrambling frequency 1/T_{scr} or a beat frequency 1/T_{beat} of different scrambling frequencies of the optical signal.

2. Receiver according to claim 1, **characterized in that** the feedback signal generating means is an eye monitor (4).

3. Receiver according to claim 1, **characterized in that** the feedback signal generating means is a FEC decoder (12).

4. Receiver according to claim 1, **characterized in that** the filtering means is a peak detector (8).

5. Receiver according to claim 1, **characterized in that** the filtering means is a switch (11) which is triggered by a gating signal generation device (10) extracting the scrambling frequency 1/T_{scr} or the beat frequency 1/T_{beat} from the optical signal.

6. Receiver according to claim 1, **characterized in that** the optical signal is structured into successive FEC frames and the beat frequency 1/T_{beat} is larger than a repetition frequency of the FEC frames.

7. Receiver according to claim 1, **characterized in that** the adaptive equalizer is an electrical equalizer, in particular a Maximum likelihood sequence estimator (3'), a Feed-Forward-Equalizer (3), or a Decision-Feedback-Equalizer.

8. Fiber optical system comprising an optical fiber line (14) with at least one polarization scrambler (17) for polarization modulation of the optical signal transmitted through the optical fiber line (14), and a receiver (1; 1'; 1") according to claim 1.

9. Fiber optical system according to claim 8, **characterized in that** the optical fiber line (14) comprises a plurality of successively arranged polarization scramblers (17) which are synchronized to a common scrambling frequency 1/T_{scr}.

10. Method for performing adaptive equalization of an optical signal containing a time-dependent periodic distortion, caused by periodic polarization scrambling in a receiver (1; 1'; 1") which comprises an adaptive equalizer (3; 3'), the method comprising the steps of:
a) equalizing the received signal in the equalizer (3, 3'),
b) generating a feedback signal (5) indicative of the quality of the equalization, and
c) providing the feedback signal (5) to the adaptive equalizer (3; 3') for optimizing the equalization,
**characterized by** the step of
b2) filtering the feedback signal (5) by selecting minimum or maximum values (6; 7) of the feedback signal (5) occurring at a scrambling frequency 1/T_{scr} or a beat frequency 1/T_{beat} of different scrambling frequencies of the optical signal.

## Patentansprüche

1. Empfänger (1; 1'; 1") für ein optisches Signal mit einer zeitabhängigen periodischen Verzerrung, welche von einer periodischen Polarisationsverwürfelung verursacht wird, umfassend: Einen adaptiven Entzerrer (3; 3'), und ein Rückkopplungssignalerzeugungsmittel (4; 12) zum Erzeugen eines Rückkopplungssignals (5) für die Abstimmung des Entzerrers (3; 3'),
**gekennzeichnet durch**
ein Filtermittel (8; 11) zum Filtern des Rückkopplungssignals (5) **durch** Auswählen von Mindest- oder Höchstwerten (6, 7) des Rückkopplungssignals (5) an der Verwürfelungsfrequenz 1/T_{scr} oder einer Schwebungsfrequenz 1/T_{beat} von verschiedenen Verwürfelungsfrequenzen des optischen Signals.

2. Empfänger nach Anspruch 1, **dadurch gekennzeichnet, dass** das Mittel zum Erzeugen des Rückkopplungssignals ein Augenmonitor (4) ist.

3. Empfänger nach Anspruch 1, **dadurch gekennzeichnet, dass** das Mittel zum Erzeugen des Rückkopplungssignals ein FEC-Decoder (12) ist.

4. Empfänger nach Anspruch 1, **dadurch gekennzeichnet, dass** das Filtermittel ein Peak-Detektor (8) Ist.

5. Empfänger nach Anspruch 1, **dadurch gekennzeichnet, dass** das Filtermittel eine Schaltung (11) ist, welche von einer Gating-Signalerzeugungsvorrichtung (10), die die Verwürfelungsfrequenz 1/T_{scr} oder die Schwebungsfrequenz 1/T_{beat} aus dem optischen Signal extrahiert, getriggert wird.

6. Empfänger nach Anspruch 1, **dadurch gekennzeichnet, dass** das optische Signal in aufeinanderfolgende FEC-Rahmen strukturiert und die Schwebungsfrequenz 1/T_{beat} größer als eine Wiederholfrequenz der FEC-Rahmen ist.

7. Empfänger nach Anspruch 1, **dadurch gekennzeichnet, dass** der adaptive Entzerrer ein elektrischer Entzerrer, insbesondere ein MLSE-Entzerrer (3'), ein Feed-Forward-Entzerrer (3) oder ein Entscheidungsrückkopplungsentzerrer ist.

8. Faseroptisches System mit einer optischen Faserleitung (14) mit mindestens einem Polarisationsverwürfeler (17) für die Polarisationsmodulation des über die optische Faserleitung (14) übertragenen optischen Signals, und einem Empfänger (1; 1'; 1") gemäß Anspruch 1.

9. Faseroptisches System nach Anspruch 8, **dadurch gekennzeichnet, dass** die optische Faserleitung (14) eine Vielzahl von hintereinander angeordneten Polarisationsverwürfelern (17) umfasst, welche auf eine gemeinsame Verwürfelungsfrequenz 1/T_{scr} synchronisiert sind.

10. Verfahren zum Ausführen einer adaptiven Entzerrung eines optischen Signals mit einer zeitabhängigen periodischen Verzerrung, welche von einer periodischen Polarisationsverwürfelung in einem Empfänger (1; 1': 1") mit einem adaptiven Entzerrer (3; 3') verursacht wird, wobei das Verfahren die folgenden Schritte umfasst:
a) Entzerren des empfangenen Signals im Entzerrer (3; 3'),
b) Erzeugen eines Rückkopplungssignals (5), welches die Qualität der Entzerrung anzeigt, und
c) Bereitstellen des Rückkopplungssignals (5) an den adaptiven Entzerrer (3; 3') zur Optimierung der Entzerrung,
**gekennzeichnet durch** den Schritt des
b2) Filterns des Rückkopplungssignals (5) **durch** Auswählen von Mindest- oder Höchstwerten (6; 7) des Rückkopplungssignals (5), welches an einer Verwürfelungsfrequenz 1/T_{scr} oder einer Schwebungsfrequenz 1/T_{beat} von verschiedenen Verwürfelungsfrequenzen des optischen Signals auftritt.

## Revendications

1. Récepteur (1 ; 1'; 1") destiné à un signal optique contenant une distorsion périodique à dépendance temporelle, due à un brouillage de polarisation périodique, comprenant : un égaliseur adaptatif (3 ; 3') et un moyen de génération (4 ; 12) de signal de rétroaction pour générer un signal de rétroaction (5) servant à ajuster l'égaliseur (3 ; 3'),
**caractérisé par**
un moyen de filtrage (8 ; 11) pour filtrer le signal de rétroaction (5) en sélectionnant des valeurs minimales ou maximales (6 ; 7) du signal de rétroaction (5) à la fréquence de brouillage 1/T_{scr} ou à une fréquence de battement 1/T_{beat} de différentes fréquences de brouillage du signal optique.

2. Récepteur selon la revendication 1, **caractérisé en ce que** le moyen de génération de signal de rétroaction est un moniteur oculaire (4).

3. Récepteur selon la revendication 1, **caractérisé en ce que** le moyen de génération de signal de rétroaction est un décodeur CECT (12).

4. Récepteur selon la revendication 1, **caractérisé en ce que** le moyen de filtrage est un détecteur de crête (8).

5. Récepteur selon la revendication 1, **caractérisé en ce que** le moyen de filtrage est un commutateur (11) qui est déclenché par un dispositif de génération de signal de déclenchement périodique (10) qui extrait la fréquence de brouillage 1/T_{scr} ou la fréquence de battement 1/T_{beat} du signal optique.

6. Récepteur selon la revendication 1, **caractérisé en ce que** le signal optique est structuré en trames CECT successives et la fréquence de battement 1/T_{beat} est supérieure à une fréquence de répétition des trames CECT.

7. Récepteur selon la revendication 1, **caractérisé en ce que** l'égaliseur adaptatif est un égaliseur électrique, en particulier un estimateur du maximum de vraisemblance de la séquence (3'), un égaliseur à action anticipatrice (3) ou un égaliseur à retour de décision.

8. Système de fibre optique comprenant une ligne de fibre optique (14) avec au moins un brouilleur de polarisation (17) pour la modulation de polarisation du signal optique transmis par l'intermédiaire de la ligne de fibre optique (14), et un récepteur (1 ; 1' ; 1") selon la revendication 1.

9. Système de fibre optique selon la revendication 8, **caractérisé en ce que** la ligne de fibre optique (14) comprend une pluralité de brouilleurs de polarisation (17) positionnés successivement qui sont synchronisés par rapport à une fréquence de brouillage 1/T_{scr} commune.

10. Procédé pour réaliser une égalisation adaptative d'un signal optique contenant une distorsion périodique à dépendance temporelle, due à un brouillage de polarisation périodique dans un récepteur (1 ; 1' ; 1") qui comprend un égaliseur adaptatif (3 ; 3'), le procédé comprenant les étapes de :
a) égaliser le signal reçu dans l'égaliseur (3 ; 3'),
b) générer un signal de rétroaction (5) indiquant la qualité de l'égalisation, et
c) fournir le signal de rétroaction (5) à l'égaliseur adaptatif (3 ; 3') pour optimiser l'égalisation,
**caractérisé par** l'étape de
b2) filtrer le signal de rétroaction (5) en sélectionnant des valeurs minimales ou maximales (6 ; 7) du signal de rétroaction (5) se produisant à une fréquence de brouillage 1/T_{scr} ou à une fréquence de battement 1/T_{beat} de différentes fréquences de brouillage du signal optique.
